# EUROPÄISCHE PATENTANMELDUNG

(11) **EP 2 207 135 A1**
(43) Veröffentlichungstag der Anmeldung: **14.07.2010**
(21) Anmeldenummer: 09015608.4
(22) Anmeldetag: 17.12.2009
(51) Int. Cl.: G06Q 10/00

(54) **Logistikeinrichtung und Verfahren zum Betreiben einer Logistikeinrichtung**

(30) Priorität: 09.01.2009 DE 102009004641
(71) Anmelder: viastore systems GmbH, 70469 Stuttgart (DE)
(72) Erfinder: Hahn-Woernle, Christoph, 70193 Stuttgart (DE)
(74) Vertreter: Patentanwälte Ruff, Wilhelm, Beier, Dauster & Partner

(57) **Zusammenfassung**

1. Logistikeinrichtung und Verfahren zum Betreiben einer Logistikeinrichtung.
2.1. Die Erfindung betrifft eine Logistikeinrichtung, insbesondere ein Fördertechnikgerät, ein Sortiergerät oder ein Verpackungsgerät, mit wenigstens einem einstellbaren elektrischen Antrieb und einer Steuereinheit zum Ansteuern des elektrischen Antriebs.
2.2. Erfindungsgemäß weist die Steuereinheit Mittel zum Verarbeiten von Auslastungsparametern der Logistikeinrichtung und Mittel zum Einstellen von Betriebsparametern der Logistikeinrichtung in Abhängigkeit der Auslastungsparameter auf.
2.3. Verwendung z.B. für Hochregallager.

## Beschreibung

Die Erfindung betrifft eine Logistikeinrichtung, insbesondere ein Fördertechnikgerät, Sortiergerät oder Verpackungsgerät, mit wenigstens einem einstellbaren elektrischen Antrieb und einer Steuereinheit zum Ansteuern des elektrischen Antriebs. Die Erfindung betrifft auch ein Verfahren zum Betreiben einer Logistikeinrichtung.

Typische Logistikeinrichtungen sind Hochregallager mit Regalbediengeräten. Ein Regalbediengerät weist ein Lastaufnahmemittel zum Aufnehmen von Lagergut auf, das in einer Regalgasse in Längs- und in Höhenrichtung verschiebbar angeordnet ist. Zum Einlagern oder Auslagern von Lagergut wird das Lastaufnahmemittel innerhalb der Lagergasse bewegt und legt in Regalkanäle Lagergüter ab bzw. nimmt aus den Regalkanälen Lagergüter auf. Abzuarbeitende Logistikaufgaben variieren bei Regalbediengeräten, allgemein bei Fördertechnikgeräten, Sortiergeräten oder Verpackungsgeräten, stark über der Zeit. Beispielsweise müssen üblicherweise tagsüber eine große Anzahl von Logistikaufgaben abgearbeitet werden, wohingegen nachts oder an Feiertagen in der Regel nur wenige und vom Umfang kleine Logistikaufgaben abzuarbeiten sind.

Mit der Erfindung soll eine Logistikeinrichtung und ein Verfahren zum Betreiben einer Logistikeinrichtung bereitgestellt werden, die eine möglichst gute Energieeffizienz bereitstellen bzw. gegenüber konventionellen Logistikeinrichtungen und Verfahren Energieeinsparungen realisieren können.

Erfindungsgemäß ist hierzu eine Logistikeinrichtung, insbesondere ein Fördertechnikgerät, ein Sortiergerät oder ein Verpackungsgerät, mit wenigstens einem einstellbaren elektrischen Antrieb und einer Steuereinheit zum Ansteuern des elektrischen Antriebs vorgesehen, bei der die Steuereinheit Mittel zum Verarbeiten von Auslastungsparametern der Logistikeinrichtung und Mittel zum Einstellen von Betriebsparametern der Logistikeinrichtung in Abhängigkeit der Auslastungsparameter aufweist.

Die Erfindung geht von der grundsätzlichen Überlegung aus, dass im Sinne eines sparsamen Umgangs mit der zur Verfügung gestellten Energie ein konsequent durchdachter Ansatz dahingeht, möglichst wenig der bereitgestellten elektrischen Energie aufzunehmen. Energieeinsparungen können auch oder zusätzlich durch eine Rückspeisung, beispielsweise bei Bremsvorgängen, erreicht werden. Während die Rückspeisung von Energie beispielsweise bei Transportmitteln für den Personenverkehr sinnvoll sein kann, da dort gewisse Untergrenzen für Beschleunigung und Fahrgeschwindigkeit eingehalten werden müssen, um Randbedingungen im öffentlichen Verkehr erfüllen zu können, existieren solche starren Randbedingungen bei Logistikeinrichtungen in der Regel nicht. Überraschenderweise wurde herausgefunden, dass sich Energieeinsparungen bei Logistikeinrichtungen auch durch Anpassung von Betriebsparametern erreichen lassen, ohne Nachteile bei der Abarbeitung von Aufträgen, beispielsweise im Sinne der Schaffung eines Flaschenhalses, hervorzurufen. Mit der Erfindung werden Auslastungsparameter einer Logistikeinrichtung erfasst und dann, wenn die Auslastungsparameter eine Veränderung der Betriebsparameter im Sinne einer Energieeinsparung zulassen, werden die Betriebsparameter entsprechend eingestellt. Auf diese Weise kann die erfindungsgemäße Logistikeinrichtung flexibel auf eine anstehende Auftragslast reagieren und dennoch kann die Logistikeinrichtung immer mit möglichst geringer Energieaufnahme betrieben werden. Beispielsweise kann die Logistikeinrichtung dann, wenn nur wenige abzuarbeitende Aufträge anstehen, automatisch auf eine niedrigere Arbeitsgeschwindigkeit eingestellt werden, um die Energieaufnahme zu verringern und um darüber hinaus auch die mechanischen Bauteile der Logistikeinrichtung zu schonen und beispielsweise Wartungsintervalle und die Gesamtlebensdauer der Logistikeinrichtung zu verlängern. Eine Kombination mit einer Energierückspeisung, insbesondere bei Bremsvorgängen, ist selbstverständlich möglich.

Das Einstellen der Betriebsparameter der Logistikeinrichtung kann in Abhängigkeit der Auslastungsparameter auch so vorgenommen werden, dass an mehreren gleichartigen Anlagenkomponenten die Betriebsparameter ungleich eingestellt werden, wenn dies aufgrund einer auf die mehreren gleichartigen Anlagenkomponenten ungleich verteilten Auftragslast sinnvoll erscheint. Beispielsweise weist ein Automatiklager 10 Gassen auf, die jeweils von einem Regalbediengerät bedient werden. Falls alle für einen abzuarbeitenden Auftrag oder wenigstens die Mehrzahl der zur Abarbeitung eines Auftrags benötigten Lagergutbehälter sich in den Lagergassen 1 bis 3 befinden, kann die Steuereinheit dann vorsehen, dass die Regalbediengeräte der Lagergassen 1 bis 3 mit hochdynamischen Betriebsparametern betrieben werden, um den anstehenden Auftrag möglichst schnell abzuarbeiten. Die Regalbediengeräte in den übrigen Lagergassen 7 bis 10 können mit geringerer Dynamik betrieben werden, um hier Energie einzusparen. Gerade bei großen Automatiklagern kann allgemein mit einer ungleichen Einstellung von Betriebsparametern an mehreren gleichartigen oder auch verschiedenen Anlagenkomponenten auf eine spezielle und gerade anliegende Auftragslast reagiert werden. Beispielsweise können auch in zeitlicher Hinsicht Betriebsparameter variiert werden, wenn beispielsweise bei Eingang eines Auftrags klar ist, dass nachgeschaltete Logistikgeräte erst nach Ablauf eines mehr oder weniger bekannten Zeitraums benötigt werden. Beispielsweise kann bei Eingang eines Auftrags, der das Auslagern von Lagergut und dessen Verpackung bzw. Sortierung enthält, dass Verpackungsgerät noch im Ruhebetrieb gehalten werden, bis die benötigten zu verpackenden Lagergüter tatsächlich aus dem Automatiklager herausgeholt worden sind und zur Verpackung bereitstehen.

Vorteilhafterweise können als Betriebsparameter eine Arbeitsgeschwindigkeit, eine Beschleunigung und/oder ein Moment des wenigstens einen elektrischen Antriebs der Logistikeinrichtung eingestellt werden.

Versuche und Messungen der Anmelderin haben ergeben, dass bei Regalbediengeräten eine Reduzierung der Dynamikwerte um 50%, eine Energieeinsparung von 13% und eine Spielzeitverlängerung von nur 41% erzeugt. Wenn also die anstehende Auftragslast eine Verringerung der Spielzeit, entsprechend einer Zeit, die für das Ein- bzw. Auslagern eines Lagerguts und die Rückkehr an einen Referenzpunkt benötigt wird, ermöglicht, sind große Energieeinsparungen möglich. Gerade beim Anfahren eines Elektromotors aus dem Stillstand fließt üblicherweise ein sehr großer Anfahrstrom, der entsprechend auch eine starke Erwärmung der Wicklungen des Elektromotors verursacht. Wenn die erfassten Auslastungsparameter der Logistikeinrichtung es erlauben, kann ein an und für sich bekannter Sanftanlauf des elektrischen Antriebs eingestellt werden, um eine Verlustleistung durch Wärmeerzeugung zu verringern.

In Weiterbildung der Erfindung weisen die Auslastungsparameter eine Anzahl, einen Umfang, einen Zeitraum für die Abarbeitung und/oder einen Fertigstellungszeitpunkt zu erfüllender Logistikaufgaben auf.

Anhand mehrerer Auslastungsparameter kann nicht nur eine aktuelle, sondern auch eine zu erwartende Auslastung bestimmt werden. Die Steuereinheit kann dann eine Einstellung von Betriebsparametern vornehmen, um einen energieeffizienten Betrieb sicherzustellen. Beispielsweise liegt bei zahlreichen anstehenden Einlagerungsaufträgen eine aktuell sehr hohe Auslastung eines Regalbediengeräts vor. Stehen diese zahlreichen Einlagerungsaufträge aber beispielsweise am Freitagabend an, so kann die Steuereinheit anhand des Wochentages und der Tageszeit als Auslastungsparameter erkennen, dass für die zahlreichen anstehenden Einlagerungsaufträge genügend Zeit zur Verfügung steht und diese daher nicht unter Höchstlast abgearbeitet werden müssen. Die Steuereinheit kann dann beispielsweise eine Arbeitsgeschwindigkeit, eine Beschleunigung sowie ein Moment der elektrischen Antriebe des Regalbediengeräts verringern, um die Energieaufnahme zu verringern und die mechanischen Komponenten des Regalbediengeräts zu schonen. Dies deshalb, da am Wochenende in der Regel eine eher geringe Auslastung des Regalbediengeräts zu erwarten ist und es daher unerheblich ist, ob die zahlreichen anstehenden Einlagerungsaufträge noch Freitagnacht oder erst im Laufe des Wochenendes ausgeführt werden.

Wesentlich für die Erfindung ist die Erkenntnis, dass es zum Erreichen von Energieeinsparungen sinnvoller ist, vorhandene Energie zunächst gar nicht in das System hineinzustecken als sie später wieder zurückzuspeisen oder auf sonstige Weise wieder zurückzugewinnen. Selbstverständlich lässt sich die Erfindung aber auch mit der Rückspeisung oder Energiegewinnung beim Betrieb von Logistikgeräten kombinieren.

In Weiterbildung der Erfindung berücksichtigen die Mittel zum Verarbeiten von Auslastungsparametern unterschiedliche, vorgegebene Betriebszustände, beispielsweise Wareneingang, Warenausgang, Inventur und/oder Reorganisation.

Beispielsweise steht in der Regel für das Abarbeiten von Wareneingängen mehr Zeit zur Verfügung als für das Bearbeiten von Warenausgängen. Soll Ware aus einem Lager ausgelagert werden, so stehen in der Regel Abnehmer bereit, die auf die ausgelagerten Waren warten. Umgekehrt dient das Einlagern von Waren ja gerade dazu, eine Wartezeit bis zum Verkauf oder bis zur Weiterverwendung zu überbrücken. Prinzipiell kann daher das Einlagern von Waren langsamer erfolgen als das Auslagern, ohne die pünktliche und bedarfsgerechte Abarbeitung einer Logistikaufgabe zu gefährden.

In Weiterbildung der Erfindung betreffen die Betriebsparameter das wenigstens teilweise Abschalten von Sensorik, Steuergeräten und/oder elektrischen Einheiten.

Beispielsweise kann eine deutliche Energieeinsparung dadurch erreicht werden, dass beim Abarbeiten von Einlagerungsaufträgen die Sensorik, die ausschließlich das Auslagern von Waren betrifft, komplett abgeschaltet und dadurch keine oder nur noch eine verringerte Verlustleistung beansprucht. Jeder Lagergasse ist in der Regel ein Einlagerübergabeplatz und ein Auslagerübergabeplatz zugeordnet. Beim Abarbeiten von Einlagerungsaufträgen wird die Sensorik am Auslagerübergabeplatz nicht benötigt und kann abgeschaltet oder in einen Ruhezustand versetzt werden. Dies gilt beispielsweise auch für elektrische Antriebe oder auch Netzteile von peripheren Logistikeinheiten, die zur Abarbeitung eines gerade anstehenden Auftrags nicht benötigt werden. Gegebenenfalls kann sogar in periphere Haustechnikbereiche eingegriffen werden. Beispielsweise kann dann, wenn keine Aufträge zur Abarbeitung anstehen, eine Beleuchtung oder eine Heizung automatisch abgeschaltet werden, da dann auch kein Überwachungspersonal mehr vorhanden ist oder beispielsweise Überwachungskameras zeitweise nicht mehr benötigt werden.

In Weiterbildung der Erfindung bestimmen die Mittel zum Verarbeiten von Auslastungsparametern eine zu erwartende Auslastung in vorausschauender Weise, insbesondere anhand anstehender, abzuarbeitender Aufträge und/oder anhand statistischer Erfahrungswerte.

Im Zusammenhang mit einer vorausschauenden Bestimmung von Auslastungsparametern kann die erfindungsgemäße Logistikeinrichtung in besonders energieeffizienter Weise eingesetzt werden. Beispielsweise kann eine aktuelle Auslastung sehr hoch sein, da noch zahlreiche Logistikaufgaben zu erledigen sind. Vorausschauend kann aber beispielsweise die Auftragslast stark zurückgehen, so dass beispielsweise eine Arbeitsgeschwindigkeit trotz aktuell hoher Auslastung verringert werden kann, um eine Auftragslast über die Zeit gesehen zu vergleichmäßigen. Bei einer solchen Beurteilung und vorausschauenden Bestimmung von Auslastungsparametern können auch statistische Erfahrungswerte herangezogen werden, die dann auch eine Auslastung in der Vergangenheit berücksichtigen. Beispielsweise ist es durchaus möglich, dass an Wochenenden die Auftragslast stets sehr gering ist. Darüber hinaus können saisonale Erfahrungswerte berücksichtigt werden, wenn beispielsweise Saisonware eingelagert bzw. ausgelagert wird und daher in Abhängigkeit der Jahreszeit schwankende Auftragslasten zu erwarten sind.

Das der Erfindung zugrundeliegende Problem wird auch durch ein Verfahren zum Betreiben einer Logistikeinrichtung, insbesondere eines Fördertechnikgeräts, eines Sortiergeräts oder eines Verpackungsgeräts, mit wenigstens einem einstellbaren elektrischen Antrieb und einer Steuereinheit zum Ansteuern des elektrischen Antriebs gelöst, bei dem die Schritte des Erfassens von Auslastungsparametern der Einrichtung und des Einstellens von Betriebsparametern der Logistikeinrichtung in Abhängigkeit der Auslastungsparameter vorgesehen sind.

Die Einstellung der Betriebsparameter kann damit automatisch von der Logistikeinrichtung selbst vorgenommen werden.

In Weiterbildung der Erfindung ist das regelmäßige Erfassen, insbesondere fortlaufendes Erfassen oder Erfassen zu gleichmäßig beabstandeten Zeitpunkten, der Auslastungsparameter und das dynamische Einstellen der Betriebsparameter in Abhängigkeit der Auslastungsparameter vorgesehen.

Auf diese Weise kann eine dynamische Einstellung der Betriebsparameter erreicht werden, die auf aktuelle Schwankungen der Auslastung schnell und flexibel reagiert. Selbstverständlich wird diese dynamische Einstellung automatisch vom Lagerverwaltungssystem oder einer Steuerung der Logistikeinrichtung selbst vorgenommen.

In Weiterbildung der Erfindung ist das Einstellen einer Arbeitsgeschwindigkeit, einer Beschleunigung und/oder eines Moments des wenigstens einen elektrischen Antriebs als Betriebsparameter vorgesehen.

In Weiterbildung der Erfindung ist das Erfassen einer Anzahl, eines Umfangs, eines Zeitraums für die Abarbeitung und/oder Fertigstellungszeitpunkts zu erfüllender Logistikaufgaben als Auslastungsparameter vorgesehen.

In Weiterbildung der Erfindung ist das Berücksichtigen von vorgegebenen Betriebszuständen als Auslastungsparameter vorgesehen, insbesondere die Betriebszustände Wareneingang, Warenausgang, Inventur und/oder Reorganisation.

In Weiterbildung der Erfindung ist das wenigstens teilweise Ab- bzw. Anschalten von Sensorik, Steuergeräten und/oder elektrischen Einheiten in der Logistikeinrichtung als Betriebsparameter vorgesehen.

In Weiterbildung der Erfindung ist das vorausschauende Ermitteln von Auslastungsparametern vorgesehen, insbesondere anhand anstehender, abzuarbeitender Aufträge, bekannter zeitlicher Abfolgen und/oder statistischer Erfahrungswerte.

In Weiterbildung der Erfindung ist das Verwenden selbstlernender Algorithmen beim Ermitteln von Auslastungsparametern vorgesehen.

Auf diese Weise kann eine Logistikeinrichtung auch für unterschiedliche Branchen immer gleich konfiguriert sein. Aufgrund der selbstlernenden Algorithmen ermittelt eine Steuereinheit in der Logistikeinrichtung dann selbst, inwiefern bei dem aktuellen Einsatz saisonale Schwankungen, tageszeitliche Schwankungen oder Schwankungen über eine Arbeitswoche gesehen vorliegen. Je nach Einsatzgebiet lernt die Logistikeinrichtung somit unterschiedliche Auslastungsparameter und kann diese dann neben weiteren Auslastungsparametern beim Einstellen von Betriebsparametern berücksichtigen.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. Einzelmerkmale der unterschiedlichen dargestellten oder beschriebenen Ausführungsformen können dabei in beliebiger Weise miteinander kombiniert werden, ohne den Rahmen der Erfindung zu überschreiten. In den Zeichnungen zeigen:
- Fig. 1: ein schematisches Blockschaltbild einer erfindungsgemäßen Logistikeinrichtung,
- Fig. 2: eine schematische Darstellung eines Geschwindigkeit/ZeitDiagramms für die Logistikeinrichtung der Fig. 1 und
- Fig. 3: eine schematische Darstellung eines Beschleunigung/ZeitDiagramms für die Logistikeinrichtung der Fig. 1.

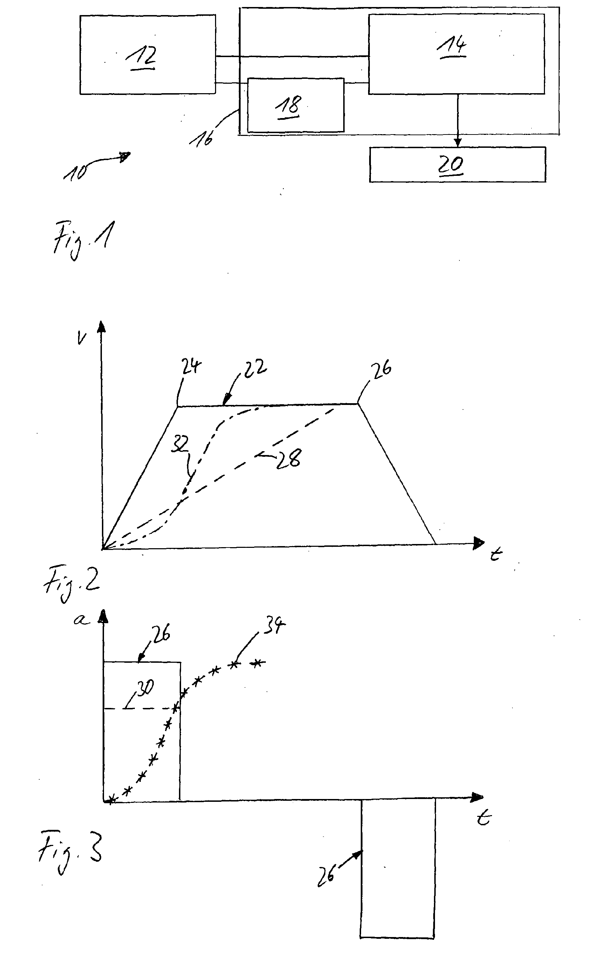

Fig. 1 zeigt ein schematisches Blockschaltbild einer erfindungsgemäßen Logistikeinrichtung, speziell eines erfindungsgemäßen Automatiklagers 10, das insbesondere als Hochregallager ausgebildet sein kann. Das Automatiklager 10 weist eine sogenannte Lagerverwaltung 12 auf, in der die abzuarbeitenden Aufträge eingehen und in der der Bestand des Automatiklagers 10 verwaltet wird. Weiter weist das Automatiklager 10 einen Leitstand 14 auf, mit dem zum einen eine manuelle Steuerung vorgenommen werden kann oder mit dem auch eine automatische, intelligente Steuerung vorgenommen werden kann. Im Rahmen der automatischen Steuerung kann der Leitstand 14 eine Arbeitsgeschwindigkeit, eine Beschleunigung und ein Moment eines Regalbediengeräts bzw. der elektrischen Antriebe dieses Regalbediengeräts oder sonstiger Anlagenkomponenten einstellen. Eine Steuereinheit 16 des Automatiklagers 10 umfasst neben dem Leitstand 14 noch eine sogenannte Energiesteuerungseinheit 18, in der die Auslastungsparameter für das Automatiklager 10 ermittelt werden. Hierzu erhält die Energiesteuerungseinheit 18 Informationen über anstehende Aufträge und der Energiesteuerungseinheit 18 liegt beispielsweise auch die aktuelle Tages-, Wochen- und Jahreszeit vor und in der Energiesteuereinheit 18 können auch selbstlernende Algorithmen vorgesehen sein und statistische Erfahrungswerte über die Auslastung abgelegt sein. Anhand der Ermittlung der Auslastungsparameter gibt die Energiesteuerungseinheit 18 dann Einstellungen für Betriebsparameter an den Leitstand 14 weiter. Im Leitstand 14 werden die von der Energiesteuerungseinheit vorgegebenen Betriebsparameter dann umgesetzt und Anlagenkomponenten 20, beispielsweise mehrere elektrische Antriebe des Regalbediengeräts, Fördertechnik, Sortiergeräte und dergleichen, werden dann entsprechend eingestellt bzw. betrieben. Zu den Anlagenkomponenten 20 können aber beispielsweise auch Sensoren gehören, die in bestimmten Betriebszuständen nicht benötigt und dann im Sinne einer Energieeinsparung abgeschaltet werden können.

Wird in der Energiesteuerungseinheit 18 beispielsweise festgestellt, dass die aktuelle Auslastung des Automatiklagers 10 noch hoch ist und auch noch zahlreiche Aufträge zur Abarbeitung anstehen, so kann dies in Abhängigkeit eines bestimmten Wochentags entweder zu einem Betrieb des Automatiklagers 10 und der zugehörigen Regalbediengeräte mit maximaler Arbeitsgeschwindigkeit oder zu einem Betrieb mit verringerten Dynamikwerten, also geringerer Beschleunigung, Moment und Arbeitsgeschwindigkeit führen. Stellt die Energiesteuerungseinheit 18 nämlich beispielsweise fest, dass angesichts eines aktuellen Wochentags und einer aktuellen Tageszeit, beispielsweise Freitagabend, für die nächsten 48 Stunden keine weiteren Auftragseingänge mehr zu erwarten sind, so gibt die Energiesteuerungseinheit 18 dem Leitstand 14 vor, die Anlagenkomponenten 20 mit reduzierten Dynamikwerten, beispielsweise mit reduzierter Arbeitsgeschwindigkeit, zu betreiben. Dies deshalb, da in den nächsten 48 Stunden ausreichend Zeit zur Verfügung steht, die anstehenden Logistikaufgaben fertigzustellen und vor dem nächsten zu erwartenden, hohen Auftragseingang am Montagmorgen vollständig abzuschließen. Auf diese Weise kann durch die reduzierten Dynamikwerte des Automatiklagers, insbesondere des Regalbediengeräts, Energie eingespart werden und die mechanischen Komponenten des Regalbediengeräts können geschont werden. Dadurch lassen sich beispielsweise auch Wartungsintervalle verlängern.

Neben dem Regalbediengerät selbst können beispielsweise auch periphere Einheiten, wie Fördertechnik, Senkrechtförderer, Verfahrwagen, Wickler, Palettierer und Roboter einer Förderanlage mittels der Energiesteuerungseinheit so eingestellt werden, dass sie möglichst wenig elektrische Energie aufnehmen und dennoch die anstehenden Logistikaufgaben zuverlässig erledigen können. Beispielsweise kann in Ruhezeiten des Automatiklagers 10 eine Beleuchtung oder sogar eine Heizung abgeschaltet werden. Liegen beispielsweise nur Aufträge zur Wareneinlagerung vor, so kann im Warenausgangsbereich die Sensorik abgeschaltet oder in einen Energiesparmodus versetzt werden und auch Beleuchtung, Heizung und dergleichen können heruntergefahren werden. Allgemein ist es bei der erfindungsgemäßen Logistikeinrichtung und dem erfindungsgemäßen Verfahren möglich, Teilbereiche einer Förderanlage in Abhängigkeit von Auslastungsparametern unterschiedlich zu betreiben, um einen möglichst energieeffizienten Betrieb sicherzustellen.

Am Leitstand 14 können neben dem automatischen Betrieb auch manuelle Einstellungen vorgenommen werden. Beispielsweise kann vorgesehen sein, dass während des Wochenendes oder während der Betriebsferien das Automatiklager 10 in einen Modus versetzt wird, in dem ohnehin immer mit niedriger Arbeitsgeschwindigkeit gearbeitet wird. Erfindungsgemäß ist vorgesehen, dass dann, wenn die Energiesteuerungseinheit 18 erkennt, dass aufgrund unerwartet hoher Auftragslast die Dynamikwerte erhöht werden müssen, die manuell vorgegebenen Betriebsparameter durch von der Energiesteuerungseinheit 18 vorgegebene Betriebsparameter ersetzt werden können. Selbst bei unerwarteten Schwankungen der Auftragslast kann dadurch sichergestellt werden, dass ohne erneuten manuellen Eingriff eine zuverlässige und schnelle Bearbeitung der anstehenden Logistikaufgaben möglich ist. Nach Abarbeiten der Auftragsspitzen werden dann wieder die manuell vorgegebenen Einstellungen übernommen.

Im Leitstand 14 kann vorgesehen sein, die jeweils aktuelle Energieaufnahme permanent zu visualisieren. In gleicher Weise kann vorgesehen sein, die von der Energiesteuerungseinheit 18 ermittelten Auslastungsparameter permanent anzuzeigen, um einem Bediener oder Überwacher zu ermöglichen, die Vorgabe der Betriebsparameter durch die Energiesteuerungseinheit 18 schnell zu verstehen, gegebenenfalls zu akzeptieren oder manuell Änderungen vorzunehmen.

Die Darstellung der Fig. 2 zeigt schematisch ein Geschwindigkeits/ZeitDiagramm. Die durchgezogene Linie stellt den typischen Geschwindigkeitsverlauf bei einem Regalbediengerät dar. Gemäß der Kurve 22 wird ein Regalbediengerät vom Stillstand aus bis zu einem Punkt 24 auf eine maximale Verfahrgeschwindigkeit beschleunigt, die dann konstant gehalten wird. Kurz vor Erreichen eines vorgesehenen Zielorts wird an einem Punkt 26 der Bremsvorgang eingeleitet, der dann wieder mit konstanter Bremsbeschleunigung zum Stillstand führt.

In Fig. 3 ist die zugehörige Beschleunigungskurve 28 durchgezogen eingetragen. Zu erkennen ist, dass die Beschleunigung zunächst von null auf einen positiven Wert springt, um dann während der konstanten Verfahrgeschwindigkeit auf null zu liegen. Mit Einleiten des Bremsvorgangs springt die Beschleunigung dann wieder auf einen konstanten negativen Wert. Es ist Fig. 2 und Fig. 3 ohne Weiteres zu entnehmen, dass die Kurven 22 und 26 zwar idealisierte Kurven darstellen und in Wirklichkeit die Beschleunigung nicht von null auf einen Maximalwert springen kann, sondern Über- bzw. Unterschwinger auftreten werden. Dennoch tritt bei einem elektrischen Antrieb zum Erreichen einer maximal möglichen Beschleunigung a ein sehr hoher Anlaufstrom auf, der aber auch zu einer sehr großen Erwärmung des verwendeten Elektromotors und somit zu einer hohen Verlustleistung führt. Erhebliche Energieeinsparungen sind daher möglich, wenn beispielsweise eine Beschleunigung des Regalbediengeräts reduziert wird, wie in Fig. 2 mit der gestrichelten Kurve 28 bzw. in Fig. 3 mit der gestrichelten Kurve 30 angedeutet ist. Das Regalbediengerät wird dadurch zwar langsamer beschleunigt und erreicht erst später seine maximale Verfahrgeschwindigkeit. Wie Versuche und Messungen der Anmelderin ergeben haben, führt eine solche Reduzierung der Dynamikwerte aber nur zu einer unterproportionalen Spielzeitverlängerung des Regalbediengeräts. Wird also beispielsweise die Beschleunigung um die Hälfte verringert, so resultiert daraus keine 50%ige Verlängerung der Spielzeit des Regalbediengeräts, sondern beispielsweise lediglich eine 40%ige Spielzeitverlängerung. Beispielsweise kann auch ein Nachpendeln bei hohen Mastpositionen verringert werden.

Alternativ kann ein Geschwindigkeitsverlauf angestrebt werden, wie er in Fig. 2 mittels der strichpunktierten Linie 32 dargestellt ist. Der Geschwindigkeitsverlauf gemäß der strichpunktierten Linie 32 sieht zunächst eine sehr langsamen Geschwindigkeitsanstieg vor, um den sogenannten Ruck beim Anfahren des Regalbediengeräts zu verringern und auch den Anfahrstrom des zugehörigen elektrischen Antriebs zu verringern. Sobald das Regalbediengerät eine gewisse Geschwindigkeit erreicht hat, kann stärker beschleunigt werden. Vor Erreichen der vorgesehenen Endgeschwindigkeit wird aber die Beschleunigung bereits wieder verringert, um einen allmählichen Übergang auf die vorgesehene Endgeschwindigkeit zu erreichen. Dadurch können nicht nur elektrische Verluste minimiert werden, sondern durch Verringerung des Anfahr- bzw. Bremsrucks können auch die mechanischen Komponenten des Regalbediengeräts geschont werden.

In Fig. 3 ist noch ein weiterer, möglicher Verlauf der Beschleunigung mittels einer strichlinierten und gekreuzten Linie 34 eingezeichnet. Um den Anfahrruck, der proportional der Ableitung der Beschleunigung ist, zu reduzieren, wird ein allmählicher Anstieg der Beschleunigung und auch en allmählicher Übergang auf einen vorgesehenen Maximalwert gewählt.

## Patentansprüche

1. Logistikeinrichtung mit einer zentralen Steuereinheit (16) und mehreren Anlagenkomponenten (20), wie Regalbediengeräte, Fördertechnikgeräte, Sortiergeräte, Verpackungsgeräte oder Haustechnik, **dadurch gekennzeichnet, dass** die zentrale Steuereinheit (16) Mittel zum Verarbeiten von Auslastungsparametern der Logistikeinrichtung sowie Mittel zum Definieren von Betriebsparametern für alle oder einzelne Anlagenkomponenten (20) in Abhängigkeit der Auslastungsparameter aufweist, wobei die Auslastungsparameter eine Anzahl, einen Umfang, einen Zeitraum für die Abarbeitung und/oder einen Fertigstellungszeitpunkt zu erfüllender Logistikaufgaben aufweisen und wobei die Mittel zum Verarbeiten von Auslastungsparametern unterschiedliche, vorgegebene Betriebszustände berücksichtigen, beispielsweise Wareneingang, Warenausgang, Inventur und/oder Reorganisation.

2. Logistikeinrichtung nach Anspruch 1, **dadurch gekennzeichnet, dass** die Logistikeinrichtung als Lager ausgebildet ist und die zentrale Steuereinheit (16) mit einer Lagerverwaltungseinheit (12) verbunden ist, in der die abzuarbeitenden Aufträge eingehen und der Bestand des Lagers verwaltet wird.

3. Logistikeinrichtung nach Anspruch 1 oder 2, **dadurch gekennzeichnet, dass** die zentrale Steuereinheit (16) Mittel zum automatischen Einstellen von Betriebsparametern für alle oder einzelne Anlagenkomponenten (20) aufweist.

4. Logistikeinrichtung nach einem der vorstehenden Ansprüche, **dadurch gekennzeichnet, dass** die Betriebsparameter eine Arbeitsgeschwindigkeit, eine Beschleunigung und/oder ein Moment wenigstens eines elektrischen Antriebs einer Anlagenkomponente (20) aufweisen.

5. Logistikeinrichtung nach einem der vorstehenden Ansprüche, **dadurch gekennzeichnet, dass** die Betriebsparameter das wenigstens teilweise Abschalten von Sensorik, Steuergeräten, elektrischen Einheiten und/oder Haustechnik von Anlagenkomponenten (20) der Logistikeinrichtung betreffen.

6. Logistikeinrichtung nach einem der vorstehenden Ansprüche, **dadurch gekennzeichnet, dass** die Mittel zum Verarbeiten von Auslastungsparametern eine zu erwartende Auslastung vorausschauend bestimmen, insbesondere anhand anstehender, abzuarbeitender Aufträge, Uhrzeiten, Wochentagen und/oder anhand statistischer Erfahrungswerte.

7. Verfahren zum Betreiben einer Logistikeinrichtung mit einer zentralen Steuereinheit (16) und mehreren Anlagenkomponenten (20), wie Regalbediengeräte, Fördertechnikgeräte, Sortiergeräte, Verpackungsgeräte oder Haustechnik, **gekennzeichnet durch** die Schritte:
- Verarbeiten von Auslastungsparametern der Logistikeinrichtung in der zentralen Steuereinheit (16), wobei die Auslastungsparameter eine Anzahl, einen Umfang, einen Zeitraum für die Abarbeitung und/oder einen Fertigstellungszeitpunkt zu erfüllender Logisitkaufgaben aufweisen und wobei vorgegebene Betriebszustände als Auslastungsparameter berücksichtigt werden, insbesondere Wareneingang, Warenausgang, Inventur und/oder Reorganisation und
- Definieren von Betriebsparametern für alle oder einzelne Anlagenkomponenten in Abhängigkeit der Auslastungsparameter.

8. Verfahren nach Anspruch 7, **gekennzeichnet durch** automatisches Einstellen von Betriebsparametern für alle oder einzelne Anlagenkomponenten (20) mittels der zentralen Steuereinheit.

9. Verfahren nach Anspruch 7 oder 8, **gekennzeichnet durch** Erfassen, insbesondere fortlaufendes Erfassen oder Erfassen zu gleichmäßig beabstandeten Zeitpunkten, der Auslastungsparameter und dynamisches Einstellen der Betriebsparameter in Abhängigkeit der Auslastungsparameter.

10. Verfahren nach Anspruch 7, 8 oder 9, **gekennzeichnet durch** Einstellen einer Arbeitsgeschwindigkeit, einer Beschleunigung und/oder eines Moments wenigstens eines elektrischen Antriebs einer Anlagenkomponente (20) als Betriebsparameter.

11. Verfahren nach einem der vorstehenden Ansprüche 7 bis 10, **gekennzeichnet durch** Ab- bzw. Anschalten von Sensorik, Steuergeräten, elektrischen Einheiten und/oder Haustechnik von Anlagenkomponenten (20) der Logistikeinrichtung als Betriebsparameter.

12. Verfahren nach einem der vorstehenden Ansprüche 7 bis 11, **gekennzeichnet durch** vorausschauendes Ermitteln von Auslastungsparametern, insbesondere anhand anstehender, abzuarbeitender Aufträge, bekannter zeitlicher Abfolgen, Uhrzeiten, Wochentagen und/oder statistischer Erfahrungswerte.

13. Verfahren nach Anspruch 12, **gekennzeichnet durch** Verwenden selbstlernender Algorithmen beim Ermitteln von Auslastungsparametern.
